# EUROPÄISCHE PATENTANMELDUNG

(11) **EP 3 895 960 A1**
(43) Veröffentlichungstag der Anmeldung: **20.10.2021**
(21) Anmeldenummer: 21168523.5
(22) Anmeldetag: 15.04.2021
(51) Int. Cl.: B62B 5/06

(54) **SCHUTZVORRICHTUNG**

(30) Priorität: 16.04.2020 DE 102020110371
(71) Anmelder: Denk Fertigungstechnik GmbH & Co. KG, 94539 Grafling (DE)
(72) Erfinder: Früchtl, Thomas, 94539 Grafling (DE)
(74) Vertreter: Glück Kritzenberger Patentanwälte PartGmbB

(57) **Zusammenfassung**

Beschrieben wird eine Schutzvorrichtung 10 zum Abdecken von zylindrischen Gegenständen umfassend ein flächiges Abdeckelement 12. Das flächige Abdeckelement 12 weist wenigstens eine Materialschicht 14 aus einem federelastischen und bistabilen Stahl und wenigstens eine die Materialschicht 14 umschließende elastische Kunststoff-Schutzschicht 16 auf. Die wenigstens eine Materialschicht 14 ist aus einem flächigen Zustand in einen zusammengerollten Zustand reversibel überführbar ausgebildet. Das Abdeckelement 12 weist in Richtung der Rollachse R der Materialschicht 14 eine Breite b von 7 cm bis 40 cm und quer zu der Rollachse eine Länge a von 5 cm bis 20 cm auf. Die Materialschicht 14 weist eine Dicke von 0,03 mm bis 1 mm auf.

## Beschreibung

### Technisches Gebiet

Die vorliegende Erfindung betrifft eine Schutzvorrichtung zum Überdecken oder Abdecken von Oberflächen aus hygienischen Gründen, insbesondere von an zylindrischen Elementen angeordneten Flächen wie z.B. Griffen von Einkaufswagen oder Haltegriffen in öffentlichen Verkehrsmitteln.

### Stand der Technik

Solche zum Abdecken zylindrischer Gegenstände geeigneten Elemente sind in vielfältigen Ausführungsformen aus dem Stand der Technik bekannt. Beispielhaft seien hier DE 2623316 A1, US 2004/0135329 A1, DE 102008062367 A1, US 5364148 A, DE 102005017375 A1, US 2009/0133789 A1, FR 2935243 A1 und UK 2525402 A genannt.

Eine Vorrichtung zum Überdecken bzw. Abdecken von Griffen eines Einkaufswagens ist aus der US 6981707 B1 bekannt. Die Schutzvorrichtung ist dort durch einen elastischen längsgeschlitzten Hohlzylinder gebildet. Durch den Schlitz ist eine in axialer Richtung verlaufende Öffnung im Hohlzylinder gebildet, durch die der Hohlzylinder auf den Griff des Einkaufswagens gesteckt werden kann. Das Material dieser Griffüberdeckung ist elastisch, so dass sich der Hohlzylinder auf die in der Regel runden Griffstangen des Einkaufswagens aufschieben lässt. Bei dieser Vorrichtung ist es nachteilig, dass die Schutzvorrichtung relativ groß ist und somit eine Menge Platz beansprucht.

### Darstellung der Erfindung

Es ist Aufgabe der vorliegenden Erfindung, eine Schutzvorrichtung zu schaffen, die eine Abdeckung oder Überdeckung von Oberflächen aus hygienischen Gründen ermöglicht, und die sehr kompakt ausgebildet ist. Diese Aufgabe wird durch eine Schutzvorrichtung mit den Merkmalen des Anspruchs 1 gelöst. Weitere vorteilhafte Details, Aspekte und Ausgestaltungen der vorliegenden Erfindung ergeben sich aus den abhängigen Ansprüchen, der Beschreibung, den Beispielen und den Zeichnungen.

Erfindungsgemäß umfasst die Schutzvorrichtung zum Abdecken von zylindrischen Gegenständen ein flächiges Abdeckelement. Das flächige Abdeckelement weist wenigstens eine Materialschicht aus einem federelastischen und bistabilen Stahl und wenigstens eine die Materialschicht umschließende elastische Kunststoff-Schutzschicht auf. Die wenigstens eine Materialschicht ist aus einem flächigen Zustand in einen zusammengerollten Zustand reversibel überführbar ausgebildet. Das Abdeckelement weist in Richtung der Rollachse der Materialschicht eine Breite von 7 cm bis 40 cm und quer zu der Rollachse eine Länge von 5 cm bis 20 cm auf. Die Materialschicht weist eine Dicke von 0,03 mm bis 1 mm auf.

Allgemein wird unter dem Begriff "Bistabilität" die Eigenschaft eines Systems verstanden, zwei mögliche stabile Zustände einnehmen zu können. Der Wechsel von dem einen in den anderen stabilen Zustand wird durch einen äußeren Impuls induziert. Bei der erfindungsgemäßen Schutzvorrichtung besteht dieser äußere Impuls aus einer leichten Kraftausübung durch den Benutzer.

Erfindungsgemäß ist die wenigstens eine Materialschicht aus einem flächigen Zustand in einen zusammengerollten Zustand reversibel überführbar ausgebildet, d.h. die Materialschicht besteht aus einem in eine um eine Rollachse zusammengerollte Stellung vorgeformten federelastischen und bistabilen Stahl.

Unter einer "Rollachse" wird die Achse verstanden, um die sich die Materialschicht beim Übergang aus ihrem flächigen Zustand in ihren aufgerollten Zustand aufrollt. Je nach Ausdehnung des Schutzelements weist das Schutzelement im aufgerollten Zustand eine einlagige oder überlappende zylindrische Form auf.

Ein erfindungsgemäßes Abdeckelement wickelt sich aufgrund der Vorformung seiner Materialschicht eigenständig um ein zylindrisches abzudeckendes Element wie beispielsweise einen Griff eines Einkaufwagens oder einen Haltegriff in einem öffentlichen Verkehrsmittel. Der Benutzer braucht das Abdeckelement lediglich in dessen flächigem Zustand mit dem abzudeckenden Element in Kontakt zu bringen und einen leichten Druck auf die Bereiche des Abdeckelements auszuüben, die nicht mit dem abzudeckenden Element in Kontakt stehen. Alternativ kann die Schutzvorrichtung mit ihrem zentralen Bereich leicht gegen das abzudeckende Element geschlagen werden. Aufgrund der bistabilen Eigenschaften der Materialschicht genügen diese Impulse um einen Übergang des gesamten Abdeckelements von dessen flächigen Zustand in seinen zusammengerollten Zustand zu bewirken. Das Abdeckelement wickelt sich ohne weiteres Zutun um beispielsweise den Griff eines Einkaufwagens oder den Haltegriff in einem öffentlichen Verkehrsmittel. Nach Benutzung der Schutzvorrichtung übt der Benutzer wiederum eine leichte Kraft auf das Abdeckelement aus, wodurch dieses wieder in seinen flächigen Zustand übergeht und leicht von dem abzudeckenden Element abgenommen werden kann.

Die Gesamtdicke des Abdeckelements, also die Dicke der Materialschicht plus die Dicke der die Materialschicht beidseitig umgebenden Kunststoff-Schutzschicht, beträgt vorzugsweise zwischen 1 mm und 10 mm, vorzugweise 3 mm bis 4 mm. Eine derartige Dicke des Abdeckelements ist gut handhabbar und verstaubar.

Unter dem Begriff "Dicke" wird im Rahmen des vorliegenden Textes die Ausdehnung eines flächigen Gegenstands senkrecht zu der Ebene seiner Hauptausdehnung verstanden. Ein Materialstück der Bemaßung 3 cm x 10 cm x 1 mm weist also eine Dicke von 1 mm auf.

Die Kunststoff-Schutzschicht weist vorzugsweise eine im Vergleich zur Dicke der Materialschicht 3 bis 10 mal so große Dicke auf. Auf diese Weise wird eine gute Funktionalität und andererseits eine gute Schutzwirkung der Kunststoff-Schutzschicht sichergestellt. Während die Materialschicht die Funktion des selbsttätigen Aufrollens um das abzudeckende Element übernimmt, verhindert die die Materialschicht beidseitig umgebende Kunststoff-Schutzschicht eine Verletzung der vergleichsweise dünnen Materialschicht aus Stahl. Zudem ermöglicht die Kunststoff-Schutzschicht eine hygienische Behandlung des Abdeckelements, z.B. durch Waschen oder Kochen, ohne dass Wasser oder Desinfektionsmittel zwischen Materialschicht und Kunststoff-Schutzschicht gelangt.

Die Kunststoff-Schutzschicht haftet vorzugsweise an allen Seiten der Materialschicht an. Dies führt zu einem kompakten leicht zu reinigenden Abdeckelement, welches seine Funktion beibehält. Vorzugsweise umgibt die Kunststoff-Schutzschicht auch die Kanten der Materialschicht in Form eines Wulstes. Die Materialschicht ist somit im Wesentlichen vollständig von der anhaftenden Kunststoff-Schutzschicht umgeben. Dies ermöglicht eine gute Reinigung, Bedienungssicherheit, d.h. keine Verletzung an den Kanten der Materialschicht, sowie den Schutz der Materialschicht vor Umwelteinflüssen, wie z.B. Wasser oder Desinfektionsmittel. Zudem können bei Schutzvorrichtung nach dieser Ausführungsform keine Keime zwischen Materialschicht und Kunststoff-Schutzschicht eindringen.

Aus fertigungstechnischen Gründen kann es vorkommen, dass maximal zwei kleinere Öffnungen in der Kunststoff-Schutzschicht verbleiben. Zur Herstellung der Schutzvorrichtung wird nämlich die Materialschicht in einer Form fixiert und nachfolgend ein Kunststoff-Vorprodukt, insbesondere ein Silikon-Vorprodukt, in die Form eingespritzt. In der Regel werden zwei dünne Stifte zur Fixierung der Materialschicht eingesetzt. Nach dem Aushärten des Kunststoffs, insbesondere des Silikons, werden die Stifte entfernt und die Schutzvorrichtung kann aus der Form entnommen werden. Die Kunststoff-Schutzschicht weist an den Stellen, an denen die Stifte mit der Materialschicht in Kontakt gestanden haben, kleine Löcher auf. Es kann bei der Herstellung auch nötig werden, dass die beiden Fixierstifte die Materialschicht durchdringen. In diesem Fall weist auch die Materialschicht der Schutzvorrichtung zwei kleinere Löcher auf.

Das Abdeckelement kann sowohl in seinem vorgeformten zusammengerollten Zustand wie auch in seinem flächigen Zustand leicht transportiert werden und nimmt nur sehr wenig Platz in Anspruch. Bei der Anwendung kann das Abdeckelement entweder direkt aus seinem flächigen Zustand heraus eingesetzt werden oder das Abdeckelement wird zunächst in diesen flächigen Zustand gebracht. Nach dem Inkontaktbringen mit dem abzudeckenden Element und Ausüben eines leichten Druckes auf die Bereiche des Abdeckelements, die nicht mit dem abzudeckenden Element in Kontakt stehen, oder dem Schlagen der Schutzvorrichtung in ihrem zentralen Bereich gegen das abzudeckende Element, schnappt das Abdeckelement selbsttätig um den Griff und deckt diesen hygienisch ab.

Die Materialschicht besteht erfindungsgemäß aus einem federelastischen und bistabilen Stahl. Bevorzugt handelt es sich bei dem Stahl um einen Edelstahl, insbesondere bevorzugt um einen Chrom-Nickel-Edelstahl. Besonders bevorzugt besteht die Materialschicht aus einem federelastischen und bistabilen Federstahl. Ganz besonders bevorzugt handelt es sich um Edelstahl 1.4310. Diese Material hat ein gutes bistabiles Formverhalten und ist resistent gegen Korrosion.

Besonders bevorzugt weist die Materialschicht eine Dicke von 0,1 mm bis 0,3 mm, insbesondere bevorzugt ein Dicke von 0,2 mm, auf. Bei einer Materialschicht der genannten Dicke kommen die erfindungsgemäß erforderlichen Eigenschaften, nämlich das reversible Überführen aus einem flächigen Zustand in einen zusammengerollten Zustand, besonders gut zum Tragen. Es wird ein für den Benutzer besonders einfaches Überführen der Schutzvorrichtung aus einem bistabilen Zustand in den anderen ermöglicht.

In einer vorteilhaften Ausführungsform besteht die Kunststoff-Schutzschicht aus Silikon. Dieses Material kann zum einen mit elastischen Eigenschaften, d.h. biegsam, und zum anderen gleichzeitig so widerstandsfähig hergestellt werden, dass keine vorzeitige Abnutzung der Schutzschicht, also ein Aufbrechen oder Reißen der Schutzschicht, zu befürchten ist. Damit ist sicher gestellt, dass nicht Teile der umschlossenen Materialschicht freiliegen, was zu Beschädigungen der Materialschicht und/oder zu unhygienischen Bedingungen führen könnte.

Darüberhinaus haftet Silikon gut an einer Materialschicht aus Stahl an und weist haptisch für einen Benutzer sehr angenehm wirkende Eigenschaften auf. Silikon besitzt eine für die Anwendung im Rahmen der vorliegenden Erfindung ideale Elastizität auf und schützt gleichzeitig die Materialschicht wirkungsvoll vor Korrosion und den Anwender vor Verletzungen. Silikon kann auf erhöhte Temperaturen erhitzt werden, ist mit Wasser behandelbar und erfüllt damit hohe Hygieneanforderungen. Eine mit einem Abdeckelement aus Silikon ausgestattete Schutzvorrichtung kann sogar in siedendem Wasser ausgekocht werden, um Keimfreiheit herzustellen.

Vorzugsweise weist die Kunststoff-Schutzschicht eine Shore-A Härte von 20 bis 50, insbesondere eine Shore-A Härte von 30 bis 40 auf. Eine derartige Härte der Kunststoff-Schutzschicht hat sich als vorteilhaft herausgestellt, da die Kunststoff-Schutzschicht einerseits gut biegsam sein soll, da sie ständig zwischen einem ausgerollten planen Zustand und einem aufgerollten Benutzungszustand, in der sie einen Griff umschließt, bewegt wird. Sie muss daher eine gute Dauerbiegsamkeit aufweisen, darf aber nicht so weich sein, dass sie aufgrund der ständigen Beanspruchung aufreisst oder bricht und die Materialschicht freigelegt wird.

Die Materialschicht ist bevorzugt einstückig ausgebildet, was eine besonders einfache Handhabung bewirkt. Besonders bevorzugt weist die Materialschicht eine Wölbung auf. Die Materialschicht ist in diesem Fall in Form eines Abschnitts der Mantelfläche eines Hohlzylinders ausgebildet, wobei die Rollachse senkrecht auf der Zylinderachse steht. Die Wölbung der Materialschicht ist im gerollten Zustand der Schutzvorrichtung nach innen orientiert, also in Richtung zur Rollachse. Durch die beschriebene Form der Materialschicht werden deren bistabile Eigenschaften verbessert.

Die Materialschicht kann aber auch aus in Richtung der Rollachse aufeinanderfolgenden einzelnen Bändern mit einer Breite von jeweils 1 cm bis 5 cm bestehen, die in die gemeinsame Kunststoff-Schutzschicht eingebettet sind. Diese Variante besitzt Vorteile bei der Herstellung der Schutzvorrichtung, da schmale Bänder aus bistabilem Stahl leichter hergestellt werden können als breite Bänder. In diesem Fall muss die Kunststoff-Schutzschicht etwas fester ausgebildet sein, da sie die einzelnen Bänder stabil verbindet.

Gemäß einer weiteren, besonders bevorzugten Ausführungsform ist die Kunststoff-Schutzschicht einstückig ausgebildet. Dadurch wird die Materialschicht besonders gut vor jeden äußeren Einflüssen geschützt, die Handhabung der Schutzvorrichtung verbessert und die Verletzungsgefahr an der messerdünnen Materialschicht für den Benutzer verringert.

Vorzugsweise ist das Abdeckelement im Wesentlichen rechteckig, bevorzugt rechteckig mit abgerundeten Ecken, ausgebildet. Diese Geometrie kommt der Aufgabe, ein zylindrisches Teil abzudecken, am besten entgegen. Zudem ist diese Form des Abdeckelements leicht zu handhaben. Die bevorzugt vorgesehenen abgerundeten Ecke dienen der Verminderung der Verletzungsgefahr.

Gemäß einer weiteren, besonders bevorzugten Ausführungsform weist die Materialschicht in Draufsicht auf das flächige Abdeckelement eine rechteckige Form auf, wobei die rechteckige Materialschicht in Richtung der Rollachse eine geringere Ausdehnung aufweist als quer zur Rollachse. Eine Schutzvorrichtung mit einer derartig ausgebildeten Materialschicht ist besonders vorteilhaft und einfach handzuhaben. Insbesondere legt sich die Schutzvorrichtung besonders gut um einen zylindrischen Gegenstand.

Besonders bevorzugt weist das Abdeckelement in Richtung der Rollachse eine Breite von 9 cm bis 11 cm, bevorzugt rund 10 cm, und quer zu der Rollachse eine Länge von 12 cm bis 14 cm, bevorzugt rund 13 cm, auf. Eine Schutzvorrichtung mit einer derartigen Bemaßung des Abdeckelements ist ganz besonders vorteilhaft und einfach handzuhaben. Insbesondere legt sich die Schutzvorrichtung besonders gut um einen zylindrischen Gegenstand, insbesondere um den Griff eines Einkaufswagens oder um die Haltestange eines öffentlichen Verkehrsmittels.

Gemäß einer weiteren, besonders bevorzugten Ausführungsform der vorliegenden Erfindung umgibt die Kunststoff-Schutzschicht die parallel zur Rollachse orientierten Außenkanten der rechteckigen Materialschicht mit einer Wulstbreite von 0,5 mm bis 2 mm, vorzugsweise von 1 mm bis 1,5 mm. Auf diese Weise sind die scharfen Kanten der Materialschicht sicher von der Kunststoff-Schutzschicht eingeschlossen.

Besonders bevorzugt umgibt die Kunststoff-Schutzschicht die rechteckige Materialschicht spiegelsymmetrisch zur Rollachse und spiegelsymmetrisch zu einer in der Materialschicht mittig angeordneten, senkrecht zur Rollachse orientierten Längsachse, wobei die Ausdehnung der Kunststoff-Schutzschicht in Richtung der Rollachse dem 1,5 bis 3 fachen der Ausdehnung der Materialschicht in Richtung der Rollachse entspricht. Es hat sich herausgestellt, dass eine Schutzvorrichtung mit einer derartigen Bemaßung der Materialschicht und der Kunststoff-Schutzschicht ideal handzuhaben ist. Insbesondere legt sich die Schutzvorrichtung nach geringster Krafteinwirkung von selbst um einen zylindrischen Gegenstand, insbesondere um den Griff eines Einkaufswagens oder um die Haltestange eines öffentlichen Verkehrsmittels. Gemäß dieser Ausführungsform ist die Schutzvorrichtung also im Wesentlichen aus drei Streifen aufgebaut, wobei die Materialschicht im mittleren der drei Streifen angeordnet ist. Die Kunststoff-Schutzschicht umgibt die Materialschicht und vergrößert die Fläche der Schutzvorrichtung durch Ausbildung von zwei, beidseitig der Materialschicht angeordneten Streifen, die ausschließlich aus der Kunststff-Schutzschicht bestehen, aber keine Materialschicht aufweisen.

Die Kunststoff-Schutzschicht kann auch aus mehreren Schicht bestehen. So kann vorzugsweise die Oberfläche der Kunststoff-Schutzschicht hydrophob oder mit einem antiviralen und/oder antibakteriellen Mittel behandelt sein. Auf die Kunststoff-Schutzschicht kann auch eine die Oberfläche des Abdeckelements bildende Oberflächenschicht aus einem hitzebeständigen und leicht zu desinfizierenden Material aufgebracht sein.

Vorteilhafterweise umschließt die Kunststoff-Schutzschicht die Materialschicht wasserfest. Dies verhindert das Eindringen von Wasser zwischen Materialschicht und Kunststoff-Schutzschicht, was zu verbesserten hygienischen Bedingungen führt. Zudem ist die Materialschicht aus Stahl besser vor Korrosion geschützt. Ein wasserfestes Umschließen der Materialschicht wird besonders vorteilhaft durch eine Kunststoff-Schutzschicht aus Silikon verwirklicht.

In einer vorteilhaften Weiterbildung der Erfindung haftet die Kunststoff-Schutzschicht an der Materialschicht an, d.h. ist adhäsiv mit ihr verbunden. Hierdurch wird eine innige Verbindung zwischen Materialschicht und Kunststoff-Schutzschicht geschaffen, die jedes Eindringen von Schmutz, Keimen oder Flüssigkeit zwischen Materialschicht und Kunststoff-Schutzschicht verhindert.

Vorzugsweise besteht die Kunststoff-Schutzschicht aus einem Kunststoff, der eine Hitzebeständigkeit von wenigstens 80° C aufweist. Auf diese Weise kann das Abdeckelement z.B. in der Geschirrspülmaschine oder Waschmaschine leicht gereinigt und desinfiziert werden. Man könnte das Abdeckelement auch in siedendem Wasser auskochen oder in ein Desinfektionsmittel eintauchen oder mit einem solchen Desinfektionsmittel übersprühen.

Vorzugsweise sind an einander abgewandten Enden des Abdeckelements Betätigungselemente, wie z.B. Laschen, befestigt, um das Abdeckelement von einer aufgerollten Stellung zu lösen. Das um einen Griff gerollte Abdeckelement kann mit Hilfe solcher Betätigungselemente leicht aufgebracht und auch entfernt werden.

### Kurze Beschreibung der Zeichnungen

Die Erfindung soll nachfolgend anhand von Ausführungsbeispielen im Zusammenhang mit den Zeichnungen näher erläutert werden. Es wird aber ausdrücklich darauf hingewiesen, dass die Erfindung nicht auf die angegebenen Beispiele beschränkt sein soll. Es zeigen
- Fig. 1: eine Draufsicht auf ein die Schutzvorrichtung bildendes Abdeckelement,
- Fig. 2: einen Schnitt durch das Abdeckelement aus Fig. 1 entlang der Linie II - II,
- Fig. 3: einen Schnitt analog der Fig. 2 durch eine alternative Ausführungsform eines Abdeckelements;
- Fig. 4: eine Seitenansicht des Abdeckelements gemäß Fig. 1 in ebener Aufbringposition vor dem Aufbringen auf die Oberfläche eines Griffes, und
- Fig. 5: eine Seitenansicht ähnlich Fig. 3, bei welcher das Abdeckelement in seiner den Griff umwickelnden Abdeckposition dargestellt ist.

### Wege zur Ausführung der Erfindung

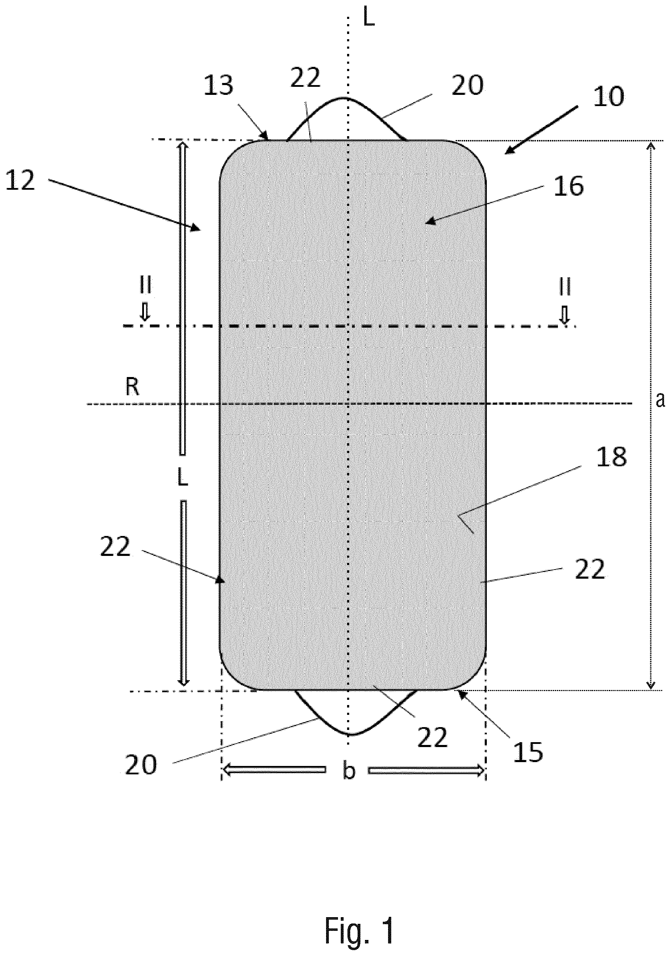

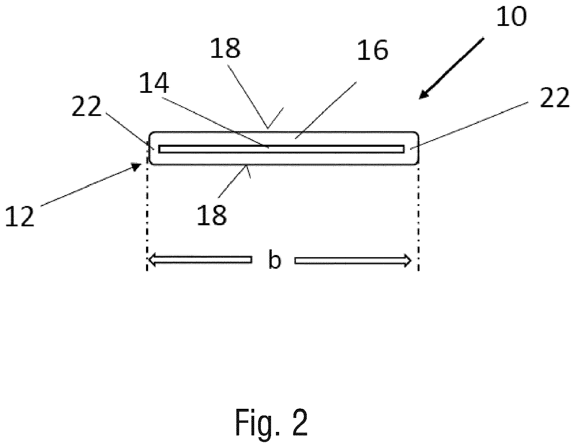

Die Schutzvorrichtung 10 besteht gemäß den Figuren 1 und 2 aus einem Abdeckelement 12, welches aus zwei Schichten 14, 16 besteht. Das Abdeckelement 12 hat eine Breite b zwischen 9 cm und 12 cm, so dass ein Griff über eine Handbreite hinweg gut abgedeckt werden kann. Die Länge a des Abdeckelements 12 beträgt zwischen 14 cm und 16 cm. Ein Abdeckelement mit einer solchen Länge ist in der Lage, einen Griff mit einem Durchmesser zwischen 2,5 cm und 5 cm derart abzudecken, dass er komplett von dem Abdeckelement 12 umwickelt wird.

Die für die Funktion des Abdeckelements 12 wesentliche Schicht ist die im Kern des Abdeckelements 12 angeordnete Materialschicht 14, die aus einem federelastischen und bistabilen Edelstahl besteht. Diese Materialschicht 14 ist in eine - um eine Rollachse R der Materialschicht - aufgerollte Form vorgeformt und bistabil, was bedeutet, dass die aufgerollte Form eine von zwei stabilen vorgeformten Konfigurationen des Materials bildet. Die andere Form eines aus einem bistabilen Material gebildeten Elements ist in der Regel eben. Solche Materialien findet man bei Schnapp- oder Klack-Armbändern. Die Materialschicht aus Stahl ist zwischen 0,1 mm und 0,3 mm dick.

Die Materialschicht 14 ist von einer Kunststoff-Schutzschicht 16 umgeben, die an der Materialschicht 14 anhaftet und diese vollumfänglich, d.h. von allen Seite einschließt. Die Oberfläche 18 der Kunststoff-Schutzschicht 16 bildet die Oberfläche 18 des Abdeckelements 12. Die Kunststoff-Schutzschicht 16 besteht aus einem elastischen Silikon-Material.

Die Kunststoff-Schutzschicht 16 haftet an der Oberfläche der Materialschicht 14 fest an, so dass zwischen den beiden Schichten kein Zwischenraum entstehen kann, der anfällig für Keimentstehung sein könnte. Zum anderen wird durch die Adhäsion der Kunststoff-Schutzschicht 16 an der Materialschicht 14 bewirkt, dass die Materialschicht 14 vor Umwelteinflüssen wie Feuchtigkeit oder chemischen Angriffen, z.B. durch Desinfektionsmittel, und somit vor Korrosion geschützt wird.

Die Kunststoff-Schutzschicht 16 ermöglicht somit eine desinfizierende Behandlung der Oberfläche 18 des Abdeckelements 12, ohne die Materialschicht 14 zu beeinträchtigen. Des Weiteren schützt die Kunststoff-Schutzschicht 16 auch den Anwender bei der Handhabung, insbesondere vor den scharfen Kanten der sehr dünnen und damit messerscharfen Materialschicht 14, da die Kunststoff-Schutzschicht 16 die Materialschicht 14 auch im Kantenbereich 22 vollständig umgibt. Vorzugsweise ist die Kunststoff-Schutzschicht 16 wasserundurchlässig und/oder temperaturstabil, so dass das gesamte Abdeckelement 12 z.B. in siedendem Wasser desinfiziert werden kann.

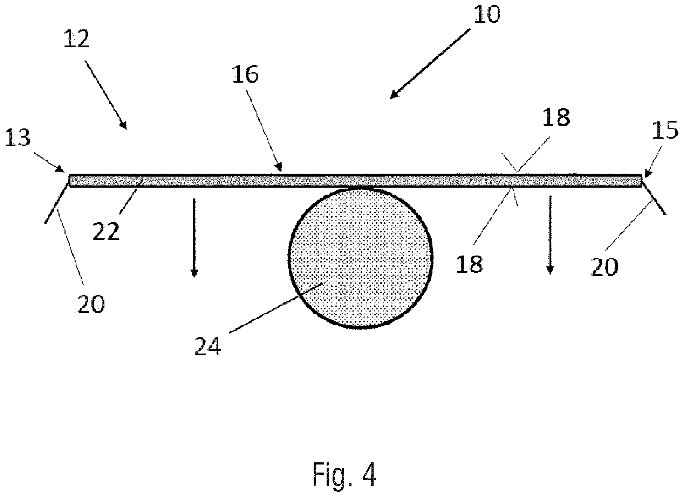

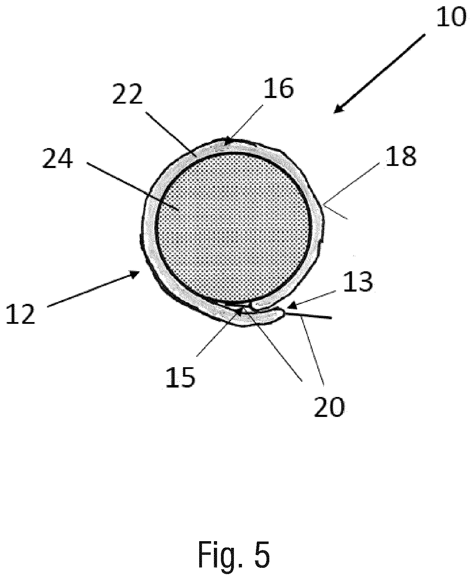

An den beiden Längsenden 13, 15 des Abdeckelements 12 sind Laschen 20 befestigt, welche dazu dienen, das Abdeckelement leichter in eine weitgehend plane Form (siehe Fig. 4) auseinanderziehen zu können, um es dann um einen Griff "schnappen" zu lassen (siehe Fig. 5). Die Laschen 20 dienen auch dazu, das Abdeckelement 12 wieder aus seiner um den Griff 24 z.B. eines Einkaufwagens oder eines öffentlichen Verkehrsmittels aufgerollten Stellung zu lösen.

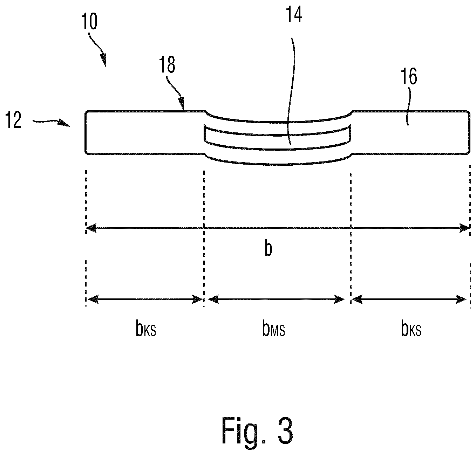

Die Figur 3 zeigt einen Schnitt analog zu der Fig. 2 durch eine alternative Ausführungsform einer Schutzvorrichtung 10. Die Materialschicht 14 ist in diesem Fall einstückig ausgebildet und weist eine Wölbung auf. Die Materialschicht 14 ist also in Form eines Abschnitts der Mantelfläche eines Hohlzylinders ausgebildet, wobei die Rollachse senkrecht auf der Zylinderachse steht. Die Wölbung der Materialschicht ist im gerollten Zustand der Schutzvorrichtung nach innen orientiert, also in Richtung zur Rollachse. Durch diese Form der Materialschicht 14 werden deren bistabile Eigenschaften weiter verbessert.

Die in Figur 3 im Schnitt gezeigte Schutzvorrichtung 10 ist ansonsten analog zu der in Fig. 1 dargestellten Schutzvorrichtung 10 aufgebaut. Sie umfasst ein Abdeckelement 12, welches aus einer Edelstahl-Materialschicht 14 und einer Silikon-Schutzschicht 16 besteht. Das Abdeckelement 12 hat eine Breite b zwischen 9 cm und 12 cm, so dass ein Griff über eine Handbreite hinweg gut abgedeckt werden kann. Die Länge a des Abdeckelements 12 beträgt zwischen 14 cm und 16 cm. Ein Abdeckelement mit einer solchen Länge ist in der Lage, einen Griff mit einem Durchmesser zwischen 2,5 cm und 5 cm derart abzudecken, dass er komplett von dem Abdeckelement 12 umwickelt wird.

Die für die Funktion des Abdeckelements 12 wesentliche Schicht ist die im Kern des Abdeckelements 12 angeordnete Materialschicht 14, die aus einem federelastischen und bistabilen Edelstahl besteht. Diese Materialschicht 14 ist in eine - um eine Rollachse R der Materialschicht - aufgerollte Form vorgeformt und bistabil. Die Materialschicht aus Edelstahl ist zwischen 0,1 mm und 0,3 mm dick.

Die Edelstahl-Materialschicht 14 ist von einer Silikon-Schutzschicht 16 umgeben, die an der Edelstahl-Materialschicht 14 anhaftet und diese vollumfänglich, d.h. von allen Seite einschließt. Die Oberfläche 18 der Silikon Schutzschicht 16 bildet die Oberfläche 18 des Abdeckelements 12. Die Silikon-Schutzschicht 16 besteht aus einem elastischen Silikon-Material mit einer Shore-A Härte von 30 bis 40.

Die Silikon-Schutzschicht 16 haftet an der Oberfläche der Edelstahl-Materialschicht 14 fest an, so dass zwischen den beiden Schichten kein Zwischenraum entstehen kann, der anfällig für Keimentstehung sein könnte. Zum anderen wird durch die Adhäsion der Silikon-Schutzschicht 16 an der Edelstahl-Materialschicht 14 bewirkt, dass die Edelstahl-Materialschicht 14 vor Umwelteinflüssen wie Feuchtigkeit oder chemischen Angriffen, z.B. durch Desinfektionsmittel, und somit vor Korrosion geschützt wird.

Die Silikon-Schutzschicht 16 weist eine im Vergleich zur Dicke der Materialschicht 3 mal so große Dicke von 0,3 mm bis 0,9 mm auf. Auf diese Weise wird eine gute Funktionalität und andererseits eine gute Schutzwirkung der Silikon-Schutzschicht 16 sichergestellt. Während die Edelstahl-Materialschicht 14 die Funktion des selbsttätigen Aufrollens um das abzudeckende Element übernimmt, verhindert die die Edelstahl-Materialschicht 14 beidseitig umgebende Silikon-Schutzschicht 16 eine Verletzung der vergleichsweise dünnen Edelstahl-Materialschicht 14. Zudem ermöglicht die Silikon-Schutzschicht 16 eine hygienische Behandlung des Abdeckelements, z.B. durch Waschen oder Kochen, ohne dass Wasser oder Desinfektionsmittel zwischen Edelstahl-Materialschicht 14 und Silikon-Schutzschicht 16 gelangt. Die Silikon-Schutzschicht 16 ermöglicht somit eine desinfizierende Behandlung der Oberfläche 18 des Abdeckelements 12, ohne die Edelstahl-Materialschicht 14 zu beeinträchtigen. Des Weiteren schützt die Silikon-Schutzschicht 16 auch den Anwender bei der Handhabung, insbesondere vor den scharfen Kanten der sehr dünnen und damit messerscharfen Materialschicht 14, da die Silikon-Schutzschicht 16 die Edelstahl-Materialschicht 14 auch im Kantenbereich 22 vollständig umgibt. Die Silikon-Schutzschicht 16 ist wasserundurchlässig und temperaturstabil ausgebildet, so dass die gesamte Schutzvorrichtung 10 in siedendem Wasser desinfiziert werden kann.

In dem in Figur 3 gezeigten Ausführungsbeispiel ist die Edelstahl-Materialschicht 14 in Draufsicht rechteckig ausgebildet. Die Silikon-Schutzschicht 16 umgibt die rechteckige Edelstahl-Materialschicht 14 spiegelsymmetrisch zur Rollachse R und spiegelsymmetrisch zu der in der Edelstahl-Materialschicht 14 mittig angeordneten, senkrecht zur Rollachse R orientierten Längsachse L, wobei die Ausdehnung der Silikon-Schutzschicht 16 in Richtung der Rollachse R dem 1,5 bis 3 fachen der Ausdehnung der Materialschicht in Richtung der Rollachse entspricht. Die Edelstahl-Materialschicht 14 weist in dem gezeigten Ausführungsbeispiel eine Breite b_{MS} (in Richtung der Rollachse R) von rund 3 cm auf. Die Ausdehnung der Silikon-Schutzschicht 16 (in Richtung der Rollachse R) setzt sich aus zwei Abschnitten b_{KS} zusammen und beträgt in Summe rund 6 cm, jeder der beiden in Figur 3 gezeigten Abschnitte b_{KS} weist also eine Breite von rund 3 cm auf.

Es hat sich herausgestellt, dass eine Schutzvorrichtung 10 mit einer derartigen Bemaßung der Materialschicht 14 und der Kunststoff-Schutzschicht 16 ideal handzuhaben ist. Insbesondere legt sich die Schutzvorrichtung 10 nach geringster Krafteinwirkung von selbst um einen zylindrischen Gegenstand, insbesondere um den Griff eines Einkaufswagens oder um die Haltestange eines öffentlichen Verkehrsmittels. Gemäß dieser Ausführungsform ist die Schutzvorrichtung 10 also im Wesentlichen aus drei Streifen aufgebaut, wobei die Materialschicht 14 im mittleren der drei Streifen angeordnet ist. Die Kunststoff-Schutzschicht 16 umgibt die Materialschicht 14 und vergrößert die Fläche der Schutzvorrichtung 10 durch Ausbildung von zwei, beidseitig der Materialschicht 14 angeordneten Streifen, die ausschließlich aus der Kunststff-Schutzschicht 16 bestehen, aber keine Materialschicht 14 aufweisen.

Die Figuren 4 und 5 zeigen die Verwendung des Abdeckelements 12 an einem Griff 24, z.B. dem Griff eines Einkaufwagens. Das Abdeckelement 12 ist mit einer bistabilen Materialschicht 14 ausgebildet. In Fig. 4 befindet sich das Abdeckelement in seiner ersten stabilen planen Konfiguration. Es kann in dieser Form leicht gegen den Griff 24 geschlagen werden, worauf es dann selbsttätig in die in Fig. 5 gezeigte aufgerollte bzw. den Griff 24 umwickelnde zweite Konfiguration schnappt, analog zu einem Schnapparmband. Der Griff 24 kann dann frei von einem Infektionsrisiko gegriffen werden.

Zum Abziehen wird die Lasche 20 am ersten Längsende 13 gegriffen, womit das Abdeckelement 12 einfach von dem Griff 24 gelöst wird, ohne den Griff 24 zu berühren. Nach dem Abziehen rollt sich das Abdeckelement 12 wieder in seine zusammengerollte zweite Konfiguration gemäß Fig. 4 ein, wonach es sehr kompakt ist und platzsparend transportiert oder mit sich geführt werden kann.

Die Laschen 20 sind vorzugsweise in der Kunststoff-Schutzschicht 16 verankert, können prinzipiell aber auch in Ausnehmungen an den Längsenden der Materialschicht 14 verankert sein. Als Betätigungselemente können statt der Laschen 20 auch Knöpfe oder Ringe oder andere an sich bekannte Elemente verwendet werden.

### Bezugszeichenliste

- 10: Schutzvorrichtung
- 12: Abdeckelement
- 13: erstes Längsende des Abdeckelements
- 14: Materialschicht
- 15: zweites Längsende des Abdeckelements
- 16: Kunststoff-Schutzschicht
- 18: Oberfläche der Kunststoff-Schutzschicht
- 20: Betätigungslasche
- 22: Wülste der Kunststoff-Schutzschicht an den Seitenkanten der Materialschicht
- 24: Griff eines Einkaufwagens oder Haltegriff in einem öffentlichen Verkehrsmittel

- b: Breite des Abdeckelements
- a: Länge des Abdeckelements
- b_{MS}: Breite der Materialschicht
- b_{KS}: Breite des über die Materialschicht hinausragenden Teils der Kunststoff-Schutzschicht
- R: Rollachse
- L: Längsachse

## Patentansprüche

1. Schutzvorrichtung (10) zum Abdecken von zylindrischen Gegenständen umfassend ein flächiges Abdeckelement (12), wobei das flächige Abdeckelement (12) aufweist
- wenigstens eine Materialschicht (14) aus einem federelastischen und bistabilen Stahl, wobei die wenigstens eine Materialschicht (14) aus einem flächigen Zustand in einen zusammengerollten Zustand reversibel überführbar ausgebildet ist, und
- wenigstens eine die Materialschicht (14) umschließende elastische Kunststoff-Schutzschicht (16),
wobei das Abdeckelement (12) in Richtung einer Rollachse (R) der Materialschicht (14) eine Breite (b) von 7 cm bis 40 cm und quer zu der Rollachse eine Länge (a) von 5 cm bis 20 cm aufweist, und die Materialschicht (14) eine Dicke von 0,03 mm bis 1 mm aufweist.

2. Schutzvorrichtung (10) nach Anspruch 1, **dadurch gekennzeichnet, dass** es sich bei dem Stahl um einen Edelstahl, insbesondere einen Chrom-Nickel-Edelstahl, oder um einen Mangan-Stahl handelt.

3. Schutzvorrichtung (10) nach einem der vorhergehenden Ansprüche, **dadurch gekennzeichnet, dass** die Materialschicht (14) eine Dicke von 0,1 mm bis 0,3 mm, bevorzugt von 0,2 mm, aufweist.

4. Schutzvorrichtung (10) nach einem der vorhergehenden Ansprüche, **dadurch gekennzeichnet, dass** die Kunststoff-Schutzschicht (16) aus Silikon besteht.

5. Schutzvorrichtung (10) nach einem der vorhergehenden Ansprüche, **dadurch gekennzeichnet, dass** die Kunststoff-Schutzschicht (16) eine Shore-A Härte von 20 bis 50, insbesondere eine Shore-A Härte von 30 bis 40, aufweist.

6. Schutzvorrichtung (10) nach einem der vorhergehenden Ansprüche, **dadurch gekennzeichnet, dass** die Materialschicht (14) aus in Richtung der Rollachse (R) aufeinanderfolgenden einzelnen Bändern mit einer Breite von jeweils 1 cm bis 5 cm besteht, wobei die Bänder in die Kunststoff-Schutzschicht (16) eingebettet sind.

7. Schutzvorrichtung (10) nach einem der Ansprüche 1 bis 5, **dadurch gekennzeichnet, dass** die Materialschicht (14) einstückig ausgebildet ist.

8. Schutzvorrichtung (10) nach einem der vorhergehenden Ansprüche, **dadurch gekennzeichnet, dass** die Kunststoff-Schutzschicht (16) einstückig ausgebildet ist.

9. Schutzvorrichtung (10) nach einem der vorhergehenden Ansprüche, **dadurch gekennzeichnet, dass** das Abdeckelement (12) im Wesentlichen rechteckig, insbesondere rechteckig mit abgerundeten Ecken, ausgebildet ist.

10. Schutzvorrichtung (10) nach einem der vorhergehenden Ansprüche, **dadurch gekennzeichnet, dass** die Materialschicht (14) eine in Draufsicht auf das flächige Abdeckelement (12) rechteckige Form aufweist, wobei die rechteckige Materialschicht in Richtung der Rollachse (R) eine geringere Ausdehnung aufweist als quer zur Rollachse (R).

11. Schutzvorrichtung (10) nach Anspruch 10, **dadurch gekennzeichnet, dass** das Abdeckelement (12) in Richtung der Rollachse (R) eine Breite (b) von 9 cm bis 11 cm, bevorzugt rund 10 cm, und quer zu der Rollachse eine Länge (a) von 12 cm bis 14 cm, bevorzugt rund 13 cm, aufweist.

12. Schutzvorrichtung (10) nach Anspruch 10 oder 11, **dadurch gekennzeichnet, dass** die Kunststoff-Schutzschicht (16) die parallel zur Rollachse (R) orientierten Außenkanten (22) der rechteckigen Materialschicht (14) mit einer Wulstbreite von 0,5 mm bis 2 mm, vorzugsweise von 1 mm bis 1,5 mm, umgibt.

13. Schutzvorrichtung (10) nach einem der Ansprüche 10 bis 12, **dadurch gekennzeichnet, dass** die Kunststoff-Schutzschicht (16) die rechteckige Materialschicht (14) spiegelsymmetrisch zur Rollachse (R) und spiegelsymmetrisch zu einer in der Materialschicht (14) mittig angeordneten, senkrecht zur Rollachse (R) orientierten Längsachse (L) umgibt, wobei die Ausdehnung der Kunststoff-Schutzschicht (16) in Richtung der Rollachse (R) dem 1,5 bis 3 fachen der Ausdehnung der Materialschicht (14) in Richtung der Rollachse (R) entspricht.

14. Schutzvorrichtung (10) nach einem der vorhergehenden Ansprüche, **dadurch gekennzeichnet, dass** die Kunststoff-Schutzschicht (16) die Materialschicht (14) wasserfest umschließt und/oder dass die Kunststoff-Schutzschicht (16) an der Materialschicht (14) anhaftet.

15. Schutzvorrichtung (10) nach einem der vorhergehenden Ansprüche, **dadurch gekennzeichnet, dass** die Kunststoff-Schutzschicht (16) aus einem Kunststoff mit einer Hitzebeständigkeit von wenigstens 80° C besteht.
